Europäisches Patentamt

European Patent Office

Office européen des brevets

(11) Veröffentlichungsnummer: **0 075 177**
**B1**

# EUROPÄISCHE PATENTSCHRIFT

(45) Veröffentlichungstag der Patentschrift:
09.04.86

(51) Int. Cl.⁴: **B 23 B 27/16**

(21) Anmeldenummer: 82108215.3

(22) Anmeldetag: 07.09.82

(54) Schneidwerkzeug.

(30) Priorität: 15.09.81 DE 3136549

(43) Veröffentlichungstag der Anmeldung:
30.03.83 Patentblatt 83/13

(45) Bekanntmachung des Hinweises auf die Patenterteilung:
09.04.86 Patentblatt 86/15

(84) Benannte Vertragsstaaten:
AT BE CH DE FR GB IT LI LU NL SE

(56) Entgegenhaltungen:
CH - A - 515 086
DE - A - 2 620 201
DE - U - 7 212 256
GB - A - 1 060 906
GB - A - 1 567 004
US - A - 3 341 923

(73) Patentinhaber: Feldmühle Aktiengesellschaft,
Fritz-Vomfelde-Platz 4, D-4000 Düsseldorf 11 (DE)

(72) Erfinder: Kraft, Harald, Dipl.-Ing., Aspachstrasse 9,
D-7336 Uhingen (DE)
Erfinder: Leimanis, Peter, Neckarbrücke 11,
D-7305 Altbach (DE)

(74) Vertreter: Uhlmann, Hans, Dr. rer.nat., Dipl.-Chem.,
Gladbacher Strasse 189, D-4060 Viersen 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft ein Schneidwerkzeug, insbesondere einen Drehmeißel, im wesentlichen bestehend aus einem Klemmhalter, der eine Ausnehmung zur Aufnahme eines Schneideinsatzes aufweist, wobei der Schneideinsatz mit mindestens einer Spannmulde versehen ist, in die ein Ansatz einer Spannpratze eingreift und die Spannpratze über eine Spannschraube mit dem Klemmhalter verbunden ist.

Ein derartiges Schneidwerkzeug ist aus der DE-A-26 20 201 bekannt. Die Schneidplatte weist dabei auf ihrer Oberseite eine sich im wesentlichen parallel zur Unterseite erstreckende Spannmulde auf, auf die der Ansatz der Spannpratze drückt, so daß sich eine flächige Auflage der Spannpratze auf der Spannmulde ergibt und der Druck, den die Spannpratze ausübt parallel zur Spannschraube verläuft, mit der die Spannpratze angezogen wird. Aus dieser Konstruktion ergibt sich, daß unter starker Belastung damit keine ziehenden Schnitte durchzuführen sind, wenn große Spanquerschnitte abgenommen werden sollen, da sich dabei die Schneidplatte in der Halterausnehmung verschiebt. Desweiteren ist nicht gewährleistet, daß die Schneidplatte beim Auswechseln immer den gleichen Sitz erhält, da es auf die Sorgfalt des Bedienenden ankommt, daß er sie exakt in die Tasche des Halters einlegt.

Aus der GB-A-1 567 004 ist ein Schneidhalter bekannt, bei dem die Spannpratze in eine in der Schneidplatte befindliche Ausnehmung eingreift und unter flächiger Berührung die Schneidplatte beim Anziehen der Klemmschraube in die im Schneidhalter angeordnete Ausnehmung zieht. Die Ausnehmung in der Schneidplatte ist als Vieleck mit abgerundeten Kanten ausgeführt, wobei eine Fläche dieses Vielecks mit der der Spannschraube des Stahlhalters zugewandten Fläche des Spannpratzenansatzes zusammenwirkt. Da die Spannpratze als solche in ihrem rückwärtigen Bereich auf einer Schräge geführt wird, die Shneidplatte ihrerseits in einer Ausnehmung des Stahlhalters zur Anlage kommt, ergibt sich bei üblichen Fertigungstoleranzen eine Überbestimmung, die zum Verkanten und Verziehen der Spannpratze führen kann oder durch die bei Einsatz von Schneidplatten aus oxidkeramischem Material eine Beschädigung der Shneidplatte hervorgerufen werden kann. Desweiteren ist nicht gewährleistet, daß die Schneidplatte stets exakt in der vorgegebenen Position zur Anlage kommt, da aufgrund der Überbestimmung eine der vorgegebenen Dimensionen zwangsläufig nicht eingehalten werden kann.

Aufgabe der Erfindung ist daher, ein Schneidwerkzeug mit einem auswechselbaren Einsatz zu schaffen, bei dem der Schneideinsatz auch beim ziehenden Schnitt gehalten und beim Auswechseln des Schneideinsatzes dieser automatisch in seine festgelegte Position gebracht wird.

Für Schneideinsätze, die geringeren Belastungen ausgesetzt sind, wobei unter geringerer Belastung sowohl mechanische als auch thermische Belastung verstanden wird, ist es üblich, den Schneideinsatz mit einer durchgehenden, im allgemeinen konischen Bohrung zu versehen, in die ein mit Gewinde versehener Zapfen eingreift, der einen kegelstumpfförmigen Kopf besitzt. Durch das Anziehen dieses Zapfens wird der Schneideinsatz gegen die Anschlagflächen des Halters gepreßt und dadurch in seiner Lage unverschiebbar fixiert. Eine solche Lösung ist beispielsweise in der US-A-33 41 923 dargestellt. Durchgehende Bohrungen schwächen jedoch die Schneideinsätze erheblich, so daß weder mit hohen Temperaturen noch mit starken Drücken, also großen Spanquerschnitten gearbeitet werden kann, weil das zum Bruch des Schneideinsatzes führt. Eine weitere wesentliche Aufgabe der Erfindung ist daher die Verhinderung des Bruches des Schneideinsatzes.

Gelöst werden diese Aufgaben durch ein gattungsgemäßen Schneidwerkzeug, das durch die Kombination folgender Merkmale gekennzeichnet ist:

a) die Spannmulde hat eine Tiefe, deren Boden als gewölbte Fläche mit einem Radius in die Oberseite des Schneideinsatzes übergeht,

b) der Radius ist größer als die Tiefe der Spannmulde,

c) der Ansatz an der Spannpratze weist die Form eines Halbzylinders oder einer Halbtonne auf,

d) der max. Halbmesser des halbtonnenförmigen oder halbzylinderförmigen Ansatzes der Spannpratze beträgt 60 bis 80 % der Größe des Radius der Spannmulde des Schneideinsatzes, so daß die Berührung des Ansatzes mit der Spannmulde punktförmig ist.

Durch diese spezielle Ausgestaltung der Spannmulde im Schneideinsatz ist es möglich, oxidkeramische Werkstoffe, wie beispielsweise Aluminiumoxid oder Zirkonoxid als Werkstoff für den Schneideinsatz einzusetzen und trotzdem eine Ausnehmung in den Schneideinsatz einbringen zu können, die nicht zu einer Schwächung und damit zum Bruch des Schneideinsatzes führt. Oxidkeramische Materialien werden seit langer Zeit zu Schneideinsätzen verpreßt und gesintert. Es war bisher jedoch nicht möglich, sie mit Ausnehmungen zu versehen, die ein zentrierendes Spannen ermöglichen, wenn diese Einsätze hohen Belastungen ausgesetzt werden sollten. Dadurch, daß die Spannmulde seitlich durch Rundungen begrenzt ist, also keinerlei scharfe Kanten vorhanden sind, ist das zu verpressende Pulver, also die Oxidkeramik nicht nur leichter verpreßbar, sondern das Pulver fließt gleichmäßiger, es ergibt sich ein gleichmäßiger Preßdruck bei der Herstellung des Schneideinsatzes, woraus eine Vergleichmäßigung der Festigkeit über den Querschnitt des Schneideinsatzes resultiert, d. h.,

**0 075 177** 4

daß der Schneideinsatz bruchanfällig ist.

Die Erfindung sieht ferner vor, daß der maximale Halbmesser des halbtonnenförmigen oder halbzylinderförmigen Ansatzes der Spannpratze 60 bis 80 % der Größe des Radius der Spannmulde im Schneideinsatz beträgt. Durch diese Ausgestaltung der Erfindung wird zusätzlich zur punktförmigen Berührung erreicht, daß die Bearbeitungsgenauigkeit bei der Herstellung des Klemmhalters bzw. der Spannpratze reduziert werden kann. So ist es dadurch möglich, die Spannpratze beispielsweise im Gießverfahren herzustellen.

Die Spannpratze greift weder flächig, wie z. B. gemäß der DE-A- 26 20 201, noch linienförmig, wie in der US-A- 33 41 923 beschrieben, am Schneideinsatz an, sondern es wird ein punktförmiger Druck ausgeübt. Dieser punktförmige Druck ergibt sich einerseits aus der Gestaltung der Spannmulde, andererseits aus der Gestaltung der Spannpratze. Nach dem Einlegen des Schneideinsatzes in die Ausnehmung des Klemmhalters greift beim Anziehen des Klemmhalters der Ansatz in die Spannmulde ein, wobei er mit einer Seitenfläche in punktförmiger Berührung steht. Durch weiteres Anziehen der Spannpratze wird ein Druck ausgeübt, der Berührungspunkt verlagert sich in der Spannmulde des Schneideinsatzes weiter nach unten, die dabei auftretende seitliche Kraft zieht den Schneideinsatz in Richtung der Begrenzung der Ausnehmung, so daß die Schneidplatte ausgerichtet wird. Durch weiteres Anziehen der Spannschraube der Spannpratze wird der Schneideinsatz fest in seiner ausgerichteten Stellung verankert.

Gemäß zweckmäßigen Ausgestaltungen der Erfindung können die Linien, die die konvexen Kurven der Spannmulde zu einer länglichen oder sternförmigen Figur verbinden, als konvexe Bögen oder als Gerade ausgestaltet sein. In diesem Fall ist erforderlich, daß der Ansatz der Spannpratze halbtonnenförmig ausgeführt ist, um eine punktförmige Berührung des Ansatzes in der Spannmulde zu gewährleisten. Werden die Linien jedoch gemäß einer bevorzugten Ausgestaltung der Erfindung als konkave Bögen ausgeführt, so weist vorteilhaft der Ansatz der Spannpratze die Form eines Halbzylinders auf.

Eine vorteilhafte Ausgestaltung der Erfindung sieht vor, daß die Breite des Ansatzes der Spannpratze gleich oder kleiner dem Abstand zwischen den Enden der konvexen Kurve ist. Diese Ausgestaltung der Erfindung ermöglicht größere Toleranzen bei der Herstellung des Klemmhalters und der Spannpratze. Beim Klemmhalter muß aufgrund dieser Ausführung die Bohrung, die die Spannpratze bzw. die Spannschraube der Spannpratze aufnimmt, nicht mit absoluter Genauigkeit der Ausnehmung im Klemmhalter zugeordnet werden, da sich durch die Punktauflage des Klemmhalteransatzes in Verbindung mit der großzügigeren Bemessung der Spannmulde die Möglichkeit ergibt, daß der Ansatz, auch wenn er unter verschiedenem Winkel - aufgrund der Fertigungstoleranzen - in die Spannmulde eingreift, noch genügend Spiel hat, um sich an einem Druckpunkt zu justieren.

Die Erfindung wird nachstehend anhand der Zeichnungen beschrieben.

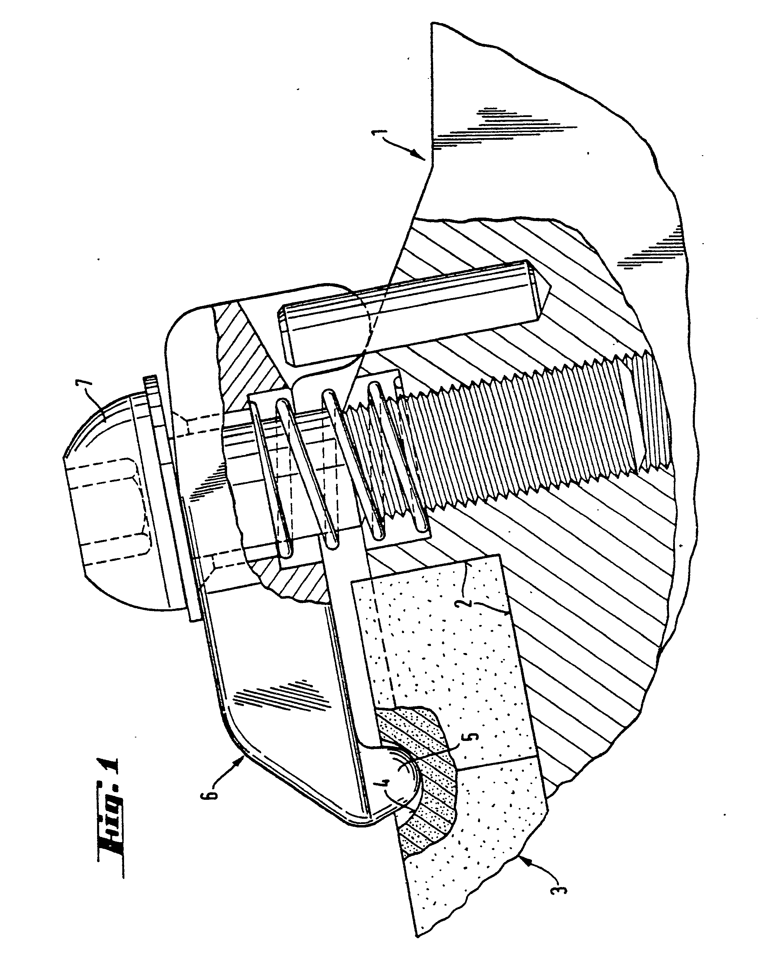

Fig. 1 zeigt einen Ausschnitt aus einem Klemmstahlhalter mit aufgesetzter Spannpratze und ein gelegtem Schneideinsatz.

Fig. 2 zeigt die Draufsicht auf einen prismatischen Schneideinsatz, dessen Spannmulde durch konvexe Bögen und konkave Linien gebildet ist.

Fig. 3 zeigt einen Teilschnitt entlang der Linie III-III von Fig. 2.

Fig. 4 zeigt einen Teilschnitt entlang der Linie IV-IV von Fig. 2.

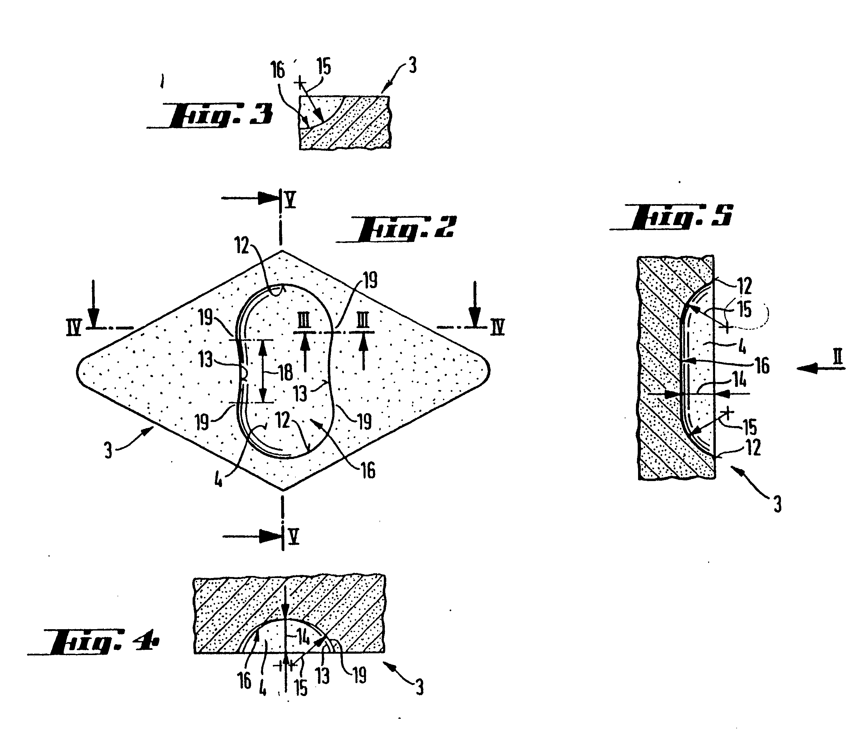

Fig. 5 einen Teilschnitt entlang der Linie V-V von Fig. 2.

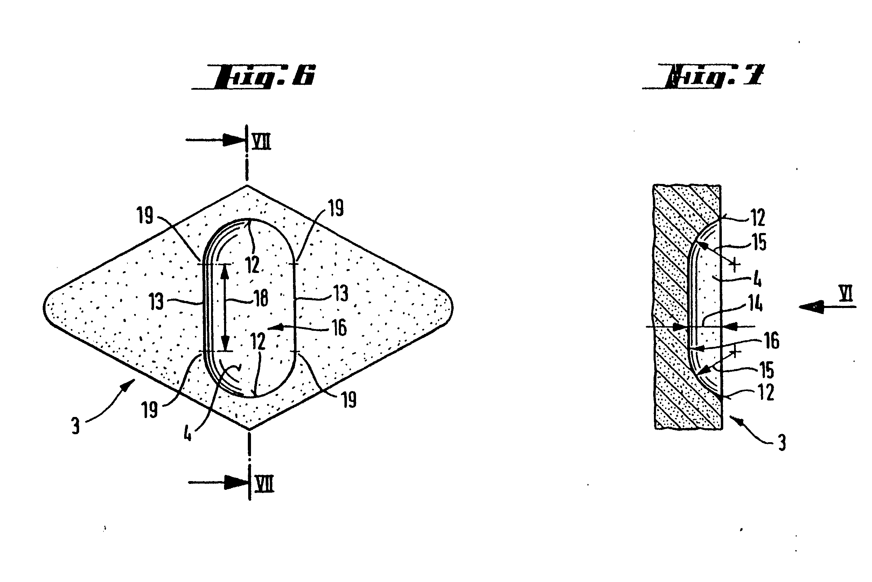

Fig. 6 zeigt einen Schneideinsatz analog Fig. 2, jedoch ist hier die Spannmulde durch die konvexen Bögen in Verbindung mit Geraden begrenzt.

Fig. 7 zeigt einen Teilschnitt durch Fig. 6 entlang der Linie VII-VII.

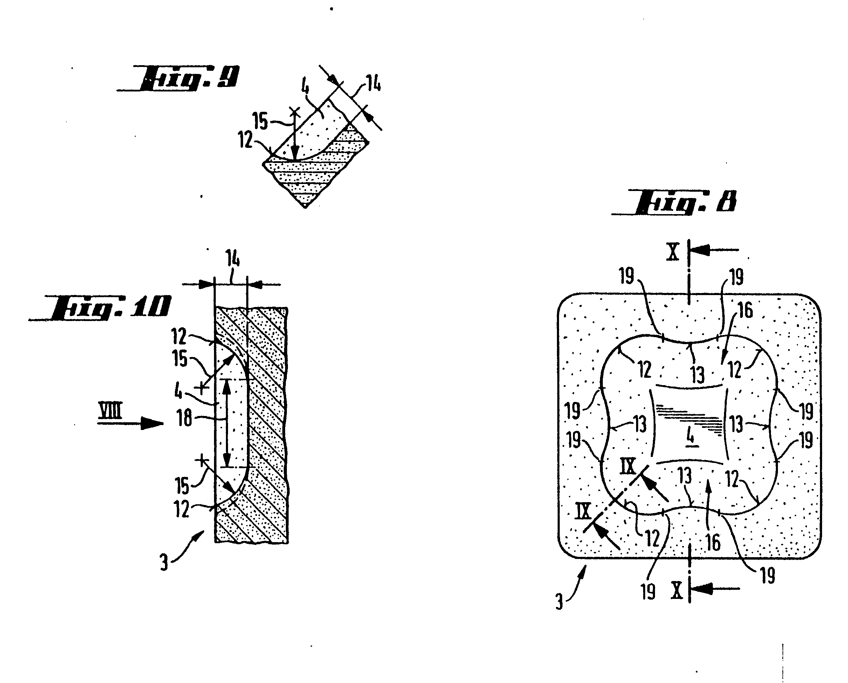

Fig. 8 zeigt eine quadratische Schneidplatte mit sternförmig ausgeführter Spannmulde.

Fig. 9 zeigt als Detail einen Schnitt eines Sternstrahles.

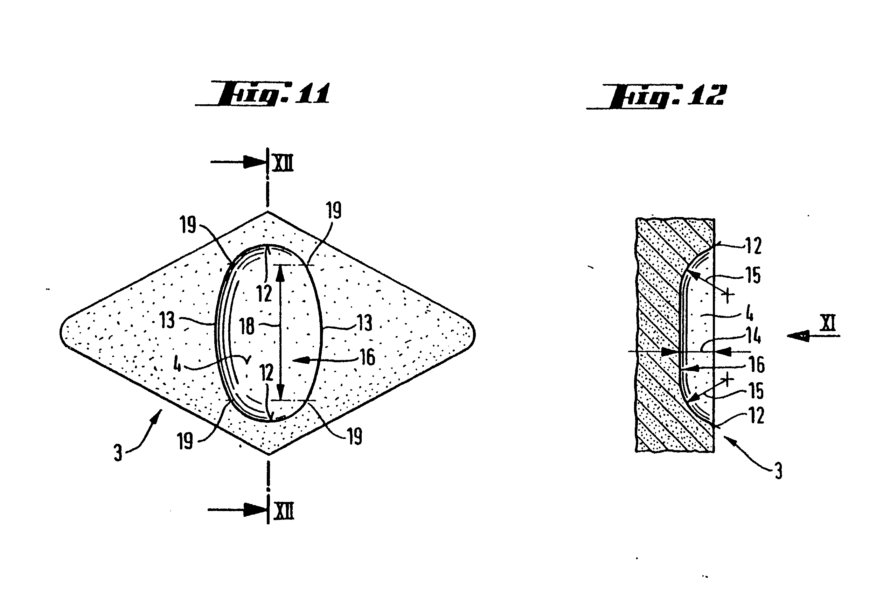

Fig. 10 einen Teilschnitt entlang der Linie X-X von Fig. 8.

Fig. 11 zeigt wiederum einen rhombusförmigen Schneideinsatz, bei dem die Begrenzungslinien der Spannmulde jedoch als konvexe Linien ausgeführt sind.

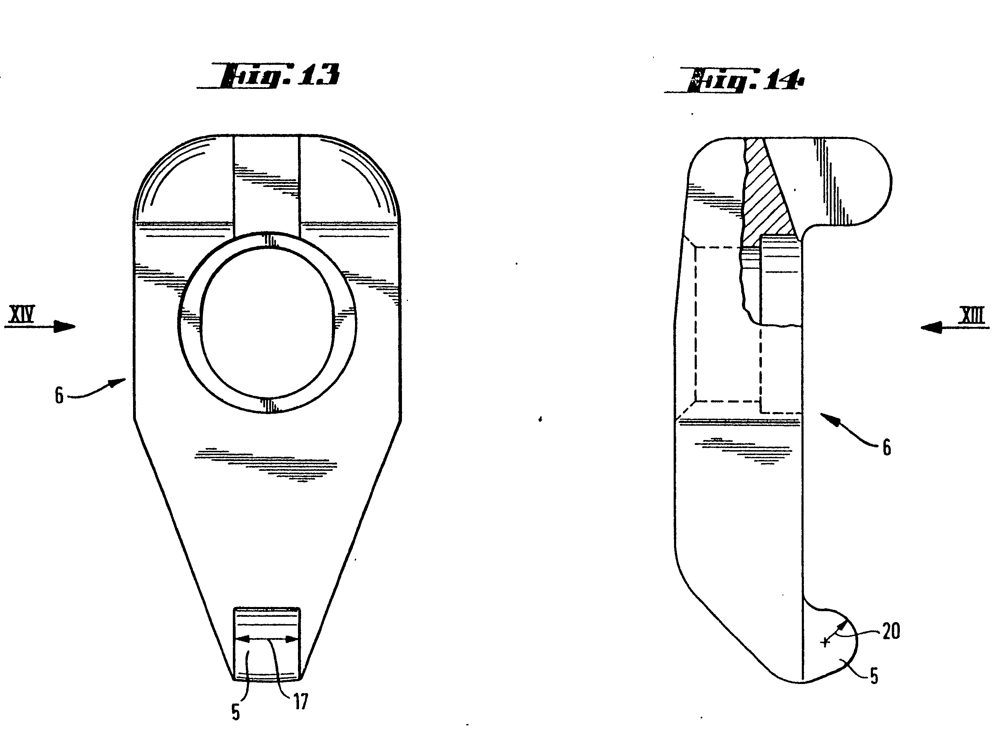

Fig. 12 zeigt den Teilschnitt durch Fig. 11 entlang der Linie XII-XII.

Fig. 13 zeigt eine Spannpratze in der Ansicht von unten.

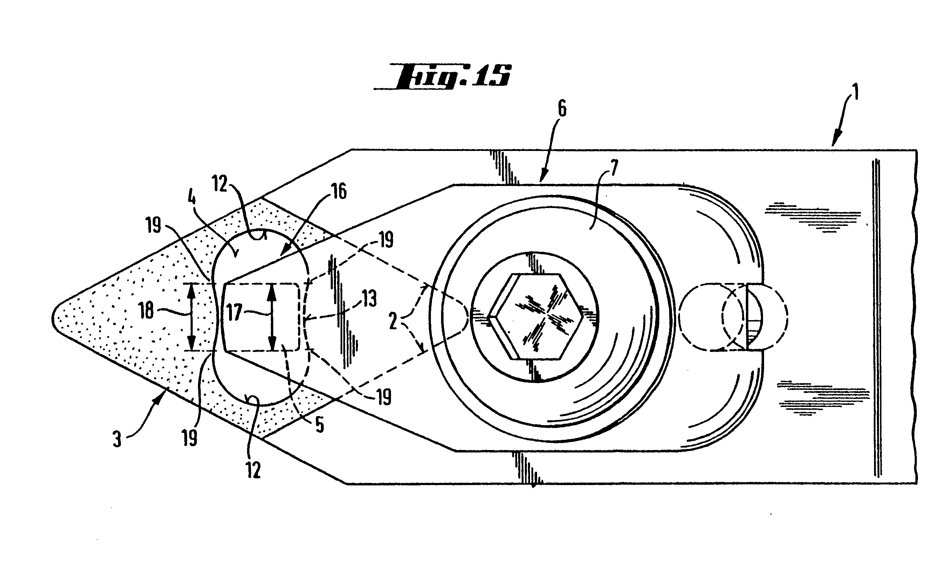

Fig. 14 die Spannpratze in der Seitenansicht im Teilschnitt und

Fig. 15 die Draufsicht auf einen Klemmhalter mit eingelegtem Schneideinsatz sowie aufgesetzter Spannpratze.

Der Klemmhalter 1 weist eine Ausnehmung 2 auf, in die der Schneideinsatz 3 eingelegt ist. Die Spannmulde 4 nimmt den Ansatz 5 der Spannpratze 6 auf, die über die Spannschraube 7 mit dem Klemmhalter 1 verbunden ist. Die konvexen Kurven 12 begrenzen die Spannmulde 4 in ihrer Längsausdehnung und gehen an ihren Enden 19 in die Linien 13 über, die in Fig. 2 als konkave Bögen dargestellt sind. Die Tiefe 14 der Spannmulde 4 wird durch einen Radius 15 geformt, dessen Mittelpunkt sich außerhalb des Schneideinsatzes befindet. Der Boden der Spannmulde 4 ergibt sich aufgrund des Radius 15 als gewölbte Fläche 18. Der Abstand 18 ist die Entfernung zwischen den an einer Linie 13 angreifenden Enden der konvexen Kurven 12.

Der Ansatz 5 der Spannpratze 6 weist eine Breite 17 auf, die gleich oder kleiner ist als der Abstand 18 zwischen den Enden 19 zweier sich gegenüberliegender konvexer Kurven 12.

## Patentansprüche

1. Schneidwerkzeug, insbesondere Drehmeißel, im wesentlichen bestehend aus einem Klemmhalter (1), der eine Ausnehmung (2) zur Aufnahme eines Schneideinsatzes (3) aufweist, wobei der Schneideinsatz (3) mit mindestens einer Spannmulde (4) versehen ist, die durch im wesentlichen gleich große konvexe Kurven und diese zu einer länglichen oder sternförmigen Figur verbindende Linien (13) begrenzt wird, in die ein Ansatz (5) einer Spannpratze (6) eingreift und die Spannpratze (6) über eine Spannschraube (7) mit dem Klemmhalter (1) verbunden ist, gekennzeichnet durch die Kombination folgender Merkmale:

a) die Spannmulde (4) hat eine Tiefe (14), deren Boden als gewölbte Fläche (16) mit einem Radius (15) in die Oberseite des Schneideinsatzes (3) übergeht,

b) der Radius (15) ist größer als die Tiefe der Spannmulde (4),

c) der Ansatz (5) an der Spannpratze (6) weist die Form eines Halbzylinders oder einer Halbtonne auf,

d) der max. Halbmesser (20) des halbtonnenförmigen oder halbzylinderförmigen Ansatzes (5) der Spannpratze (6) beträgt 60 bis 80 % der Größe des Radius (15) der Spannmulde (4) des Schneideinsatzes (3), so daß die Berührung des Ansatzes (5) mit der Spannmulde (4) punktförmig ist.

2. Schneidwerkzeug nach Anspruch 1, dadurch gekennzeichnet, daß die Linien (13) als Gerade ausgeführt sind.

3. Schneidwerkzeug nach Anspruch 1, dadurch gekennzeichnet, daß die Linien (13) als konvexe Bögen ausgeführt sind.

4. Schneidwerkzeug nach Anspruch 1, dadurch gekennzeichnet, daß die Linien (13) als konkave Bögen ausgeführt sind.

5. Schneidwerkzeug nach einem der Ansprüche 1 bis 4, dadurch gekennzeichnet, daß die Breite (17) des Ansatzes (5) der Spannpratze (6) gleich oder kleiner dem Abstand (18) zwischen den Enden (19) der konvexen Kurve (12) ist.

## Claims

1. Cutting tool, especially a lathe tool, consisting essentially of a clamping holder (1) which has a recess (2) for receiving a cutting insert (3), the cutting insert (3) being provided with at least one gripping recess (4) which is bounded by convex curves of substantially equal sizes and by lines (13) connecting these curves to form an oblong or star-shaped outline, in which gripping recess (4) engages a projection (5) of a gripping claw (6) and the gripping claw (6) is connected to the clamping holder (1) by means of a tightening screw (7), characterised by the combination of the following features:

a) the gripping recess (4) has a depth (14), the base of which rises in a curve (16) having a radius (15) to meet the upper side of the cutting insert (3),

b) the radius (15) is greater than the depth of the gripping recess (4),

c) the projection (5) on the gripping claw (6) has the shape of a half-cylinder or half-barrel,

d) the maximum radius (20) of the half-barrel-shaped or half-cylinder-shaped projection (5) of the gripping claw (6) is from 60 to 80% of the size of the radius (15) of the gripping recess (4) of the cutting insert (3), so that the projection (5) and the gripping recess (4) meet at a point.

2. Cutting tool according to claim I, characterised in that the lines (13) are straight lines.

3. Cutting tool according to claim 1, characterised in that the lines (13) are convex arcs.

4. Cutting tool according to claim 1, characterised in that the lines (13) are concave arcs.

5. Cutting tool according to any one of claims 1 to 4, characterised in that the width (17) of the projection (5) of the gripping claw (6) is equal to or less than the distance (18) between the ends (19) of the convex curve (12).

## Revendications:

1. Outil de coupe, notamment outil de tournage, constitué pour l'essentiel par un porte-plaquette (1) présentant un évidement (2) pour recevoir une plaquette de coupe (3), laquelle est dotée d'au moins une dépression pour serrage (4) qui est délimitée par des courbes convexes sensiblement de même grandeur et par des lignes (13) reliant ces courbes pour former une figure allongée ou en forme d'étoile, une saillie (5) d'une griffe de serrage (6) s'engageant dans la dépression pour serrage (4), et la griffe de serrage (6) étant liée au porte-plaquette (1) par une vis de serrage (7), caractérisé par la combinaison des caractéristiques suivantes:

a) la dépression pour serrage (4) possède une profondeur (14) telle que son fond, en tant que surface (16) bombée, se raccorde par un rayon (15) au côté supérieur de la plaquette de coupe (3),

b) le rayon (15) est plus grand que la profondeur de la dépression pour serrage (4),

c) la saillie (5) sur la griffe de serrage (6) présente la forme d'un demi-cylindre ou d'un demi-tonneau, et

d) le rayon maximal (20) de la saillie (5) en forme de demi-tonneau ou de demi-cylindre de la griffe de serrage (6) est compris entre 60 et 80 % de la valeur du rayon (15) de la dépression pour serrage (4) de la plaquette de coupe (3), de sorte que la saillie (5) est en contact ponctuel avec la dépression pour serrage (4).

2. Outil de coupe selon la revendication 1, caractérisé en ce que les lignes (13) sont réalisées sous forme de droites.

3. Outil de coupe selon la revendication 1, caractérisé en ce que les lignes (13) sont réalisées sous forme d'arcs convexes.

4. Outil de coupe selon la revendication 1, caractérisé en ce que les lignes (13) sont réalisées sous forme d'arcs concaves.

5. Outil de coupe selon l'une des revendications 1 à 4, caractérisé en ce que la largeur (17) de la saillie (5) de la griffe de serrage (6) est égale à, ou plus petite que, l'intervalle (18) entre les extrémités (19) des courbes convexes (12).

**Fig. 1**

0 075 177

**Fig. 3**

16  15  3

**Fig. 2**

V

12

19

IV                    19    III  III              IV

13        18

13

19        12        19

3

4                16

V

**Fig. 5**

12

15

4

16

14

15

12

II

3

**Fig. 4**

14

16  4  15  13  19  3

0 075 177

3

**Fig. 6**

**Fig. 7**

0 075 177

0 075 177

**_Fig. 9_**

**_Fig. 10_**

**_Fig. 8_**

## _Fig. 11_

## _Fig. 12_

0 075 177

# Fig.13

# Fig.14

XIV

XIII

6

6

11

5    17

20

5

0 075 177

Fig.15